(19) Europäisches Patentamt
European Patent Office
Office européen des brevets

(11) **EP 4 509 576 A1**

(12) **EUROPEAN PATENT APPLICATION**

(43) Date of publication:
**19.02.2025 Bulletin 2025/08**

(21) Application number: **24194661.5**

(22) Date of filing: **14.08.2024**

(51) International Patent Classification (IPC):
**C09K 5/04** *(2006.01)* **F25B 9/00** *(2006.01)*

(52) Cooperative Patent Classification (CPC):
**C09K 5/045; F25B 9/006; F25B 9/008;**
C09K 2205/106; C09K 2205/126

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.08.2023 KR 20230106988**
**17.07.2024 KR 20240094667**

(71) Applicants:
• **SK Innovation Co., Ltd.**
**Seoul 03188 (KR)**
• **SK Enmove Co., Ltd.**
**Seoul 03188 (KR)**

(72) Inventors:
• **KANG, Bong Ho**
**34124 Daejeon (KR)**
• **KIM, Hye Ri**
**34124 Daejeon (KR)**
• **NOH, Ji Seong**
**34124 Daejeon (KR)**
• **WOO, Sang Gu**
**34124 Daejeon (KR)**
• **LEE, Jae Min**
**34124 Daejeon (KR)**

(74) Representative: **Prüfer & Partner mbB**
**Patentanwälte · Rechtsanwälte**
**Sohnckestraße 12**
**81479 München (DE)**

(54) **MIXED REFRIGERANT COMPOSITION AND HEAT PUMP INCLUDING THE SAME**

(57) A mixed refrigerant composition according to exemplary embodiments includes carbon dioxide (R-744), 2,3,3,3-tetrafluoropropene (R-1234yf) and 1,1-difluoroethane (R-152a). A content of the carbon dioxide (R-744) may be 1 to 10 wt.% based on a total weight of the mixed refrigerant composition, and a content of the 2,3,3,3-tetrafluoropropene (R-1234yf) may be 65 to 95 wt.% based on the total weight of the mixed refrigerant composition, and a content of the 1,1-difluoroethane (R-152a) may be 1 to 30 wt.% based on the total weight of the mixed refrigerant composition. A boiling point at 1 atm of the mixed refrigerant composition may be -65 to -30 °C.

[FIG. 1]

**Description**

[BACKGROUND OF THE INVENTION]

1. Field of the Invention

The present invention relates to a composition including a refrigerant and a heat pump including the same.

2. Description of the Related Art

Refrigerants are substances used to remove heat from heat pumps utilized in air conditioners, refrigerators, cooling towers and the like. The refrigerants may include, for example, natural refrigerants, chlorofluorocarbon (CFC)-based refrigerants, hydrochlorofluorocarbon (HCFC)-based refrigerants, hydrofluorocarbon (HFC)-based refrigerants, and hydrofluoroolefin (HFO)-based refrigerants.

Recently, types of heat pumps used indoors and outdoors have become more diverse, and due to the development of electric vehicles, etc., the miniaturized heat pumps are required. Further, in the case of refrigerants containing chlorine (Cl), they may a cause of ozone layer destruction, etc., such that the development of refrigerants which do not contain chlorine atoms are being tried.

For example, 2,3,3,3-tetrafluoropropane (R-1234yf) which is a type of hydrofluoroolefin-based refrigerant does not contain chlorine atoms. Therefore, this substance is actively used as a refrigerant in an air conditioner for a vehicle due to a low global warming potential (GWP).

However, when 2,3,3,3-tetrafluoropropene is used as a refrigerant in the air conditioner for a vehicle due to its low coefficient of performance (COP), there is a problem that the performance of the air conditioner is decreased since an additional heat pump is required.

Therefore, there is a need to develop a refrigerant or combination of refrigerants which have a high coefficient of performance while capable of suppressing environmental pollution.

[SUMMARY OF THE INVENTION]

An object according to exemplary embodiments is to provide a mixed refrigerant composition with improved environmental friendliness, and optionally simultaneously with high coefficient of performance (COP).

Another object according to exemplary embodiments is to provide a heat pump which includes the mixed refrigerant composition, and has improved cooling or heating performance.

To achieve the above objects, according to an aspect of the present disclosure, there is provided a mixed refrigerant composition including carbon dioxide (R-744), 2,3,3,3-tetrafluoropropene (R-1234yf) and 1,1-difluoroethane (R-152a), wherein a content of the carbon dioxide (R-744) is 1 to 10% by weight based on a total weight of the mixed refrigerant composition, a content of the 2,3,3,3-tetrafluoropropene (R-1234yf) is 65 to 95% by weight based on the total weight of the mixed refrigerant composition, a content of the 1,1-difluoroethane (R-152a) is 1 to 30% by weight based on the total weight of the mixed refrigerant composition, and a boiling point at 1 atm of the mixed refrigerant composition is -65 to -30 °C.

2. The mixed refrigerant composition according to exemplary embodiments, the content of the carbon dioxide (R-744) is 1 to 5%, 1.5 to 5 %, 2 to 5 %, 3 to 5 %, 4 to 5% or 4.5 to 5 %.

The mixed refrigerant composition according to exemplary embodiments may not include an additional hydrofluorocarbon (HFC)-based refrigerant, specifically may not include difluoromethane (R-32); and/or the mixed refrigerant composition does not include an additional hydrofluoroolefin (HFO)-based refrigerant, specifically may not include 1,1-difluoroethylene (R-1132a).

The mixed refrigerant composition according exemplary embodiments may consist of the carbon dioxide (R-744), the 2,3,3,3-tetrafluoropropene (R-1234yf), and the 1,1-difluoroethane (R-152a).

In exemplary embodiments, the content of the 1,1-difluoroethane (R-152a) may be 1 to 30 %, 5 to 30 %, 10 to 30% or 13 to 25% by weight based on the total weight of the mixed refrigerant composition.

In exemplary embodiments, the content of the 1,1-difluoroethane (R-152a) may be 15 to 25 %, 15 to 23 %, 5 to 20%, or 18 to 23% by weight based on the total weight of the mixed refrigerant composition.

In exemplary embodiments, a ratio of the content of the 2,3,3,3-tetrafluoropropene (R-1234yf) to the content of the carbon dioxide (R-744) based on the total weight of the mixed refrigerant composition may be 6 to 95.

In exemplary embodiments, a ratio of the content of the 1,1-difluoroethane (R-152a) to the content of the carbon dioxide (R-744) based on the total weight of the mixed refrigerant composition may be 0.5 to 30.

In exemplary embodiments, a ratio of the content of the 2,3,3,3-tetrafluoropropene (R-1234yf) to the content of the 1,1-difluoroethane (R-152a) based on the total weight of the mixed refrigerant composition may be 2 to 19.

In exemplary embodiments, a critical temperature of the mixed refrigerant composition may be 90 to 100 °C.

In exemplary embodiments, a critical pressure of the mixed refrigerant composition may be 30 to 51 bar or 30 to 45 bar.

In exemplary embodiments, a temperature glide at a pressure of 1.5 bar of the mixed refrigerant composition may be 3 to 29 °C.

In exemplary embodiments, a temperature glide at a pressure of 15 bar of the mixed refrigerant composition may be 2 to 23 °C.

In exemplary embodiments, a latent heat at -25 °C of the mixed refrigerant composition may be 150 kJ/kg or higher, or 150 to 250 kJ/kg.

In exemplary embodiments, a global warming potential (GWP) of the mixed refrigerant composition may be 1 to 40.

In some embodiments, an ozone depleting potential (ODP) of the mixed refrigerant composition may be 0.

In some embodiments, a flammability of the mixed refrigerant composition may be Class A2L or lower in the refrigerant safety group classification of The American Society of Heating, Refrigerating and Air-Conditioning Engineers (ASHRAE).

According to another aspect of the present invention, there is provided a heat pump including the mixed refrigerant composition according to the embodiments of the present disclosure.

In the mixed refrigerant composition according to exemplary embodiments, the refrigerant included in the mixed refrigerant composition may not contain chlorine atoms (Cl), thus environmental pollution such as ozone layer destruction can be suppressed.

The mixed refrigerant composition according to exemplary embodiments may effectively decrease the ambient temperature during vaporization from liquid to gas even at a low temperature.

In addition, the mixed refrigerant composition may not be phase converted to a supercritical state while a cooler such as an air conditioner is operated. Accordingly, the condensation pressure of the compressor may not be reduced, and the coefficient of performance of a heat pump including the mixed refrigerant composition may be improved.

[BRIEF DESCRIPTION OF THE DRAWINGS]

The above and other objects, features and other advantages of the present invention will be more clearly understood from the following detailed description taken in conjunction with the accompanying drawings, in which:

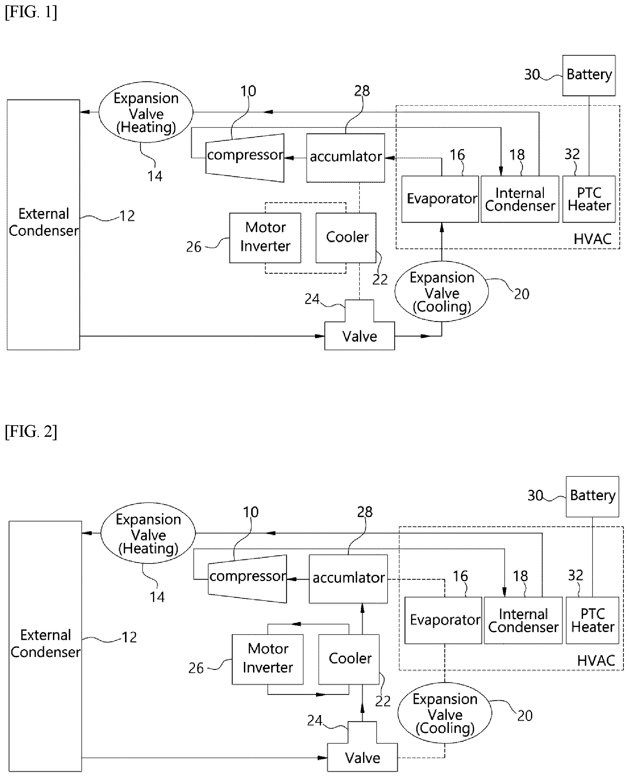

FIGS. 1 and 2 are schematic views illustrating the flow of a mixed refrigerant for heat exchange in a cooling mode or a heating mode of a heat exchanger according to exemplary embodiments, respectively.

[DETAILED DESCRIPTION OF THE INVENTION]

According to exemplary embodiments, a mixed refrigerant composition including carbon dioxide (R-744), 2,3,3,3-tetrafluoropropene (R-1234yf) and 1,1-difluoroethane (R-152a), and a heat pump including the mixed refrigerant composition are provided.

Hereinafter, the present disclosure will be described in detail. However, the embodiments are merely illustrative and the present disclosure is not limited to the specific embodiments described by way of example.

According to exemplary embodiments, refrigerants included in the mixed refrigerant composition may be refrigerants which do not contain chlorine atoms (Cl). Examples of the refrigerants which do not contain chlorine atoms (Cl) may include natural refrigerants, hydrofluorocarbon (HFC)-based refrigerants, and hydrofluoroolefin (HFO)-based refrigerants.

The natural refrigerant is a substance that exists naturally on earth distinct from the artificial compound. For example, the natural refrigerant may include at least one of ammonia (R-717), carbon dioxide (R-744), propane (R-290), propylene (R-1270) and butane (R-600a).

The hydrofluorocarbon (HFC)-based refrigerant is a refrigerant composed of hydrogen atoms (H), fluorine atoms (F) and carbon atoms (C). The hydrofluorocarbon (HFC)-based refrigerant may include, for example, at least one of difluoromethane (R-32), trifluoroiodomethane (R-13I1), 1,1-difluoroethane (R-152a), pentafluoroethane (R-125), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa) and 1,1,1,3,3-pentafluorobutane (R-365mfc).

The hydrofluoroolefin (HFO)-based refrigerant is a refrigerant composed of hydrogen atoms (H), fluorine atoms (F) and carbon atoms (C), and has at least one double bond between the carbon atoms. The hydrofluoroolefin (HFO)-based refrigerant may include, for example, at least one of 1,1,2-trifluoroethylene (R-1123), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a) and 1,2,3,3,3-pentafluoropropene (R-1225ye).

The mixed refrigerant composition according to the present disclosure includes carbon dioxide (R-744), 2,3,3,3-tetrafluoropropene (R-1234yf) and 1,1-difluoroethane (R-152a). The carbon dioxide (R-744), the 2,3,3,3-tetrafluoropropene (R-1234yf) and the 1,1-difluoroethane (R-152a) included in the mixed refrigerant composition do not contain chlorine atoms (Cl), and also the entire mixed refrigerant composition may not contain components having chlorine atoms (Cl) at all.

The carbon dioxide (R-744) is a type of the natural refrigerant, and has an ozone depleting potential (ODP) of 0 and a global warming potential (GWP) of 1. In addition, the carbon dioxide (R-744) may not be corrosive, toxic, or explosive. Due to the carbon dioxide (R-744) included in the mixed refrigerant composition, the environmental friendliness and stability of the mixed refrigerant composition may be improved.

The 2,3,3,3-tetrafluoropropene (R-1234yf) is a type of hydrofluoroolefin (HFO)-based refrigerant, and has an ozone depleting potential (ODP) of 0 and a global warming potential (GWP) of 4 or less. In addition, the R-1234yf may have high thermal stability and high evaporative latent heat. As the 2,3,3,3-tetrafluoropropene (R-1234yf) is included in the mixed refrigerant composition, the environmental friendliness, thermal stability and refrigeration capacity of the mixed refrigerant composition may be improved.

The 1,1-difluoroethane (R-152a) is a type of the hydrofluorocarbon (HFC)-based refrigerant, and has an ozone depleting potential (ODP) of 0 and a global warming potential (GWP) of 150 or less. The 1,1-difluoroethane (R-152a) may have a low molecular mass and a low saturation density. Due to the 1,1-difluoroethane (R-152a) included in the mixed refrigerant composition, the environmental friendliness of the mixed refrigerant composition may be improved. In addition, a discharge pressure from a compressor may be low due to the low saturation density. Therefore, a change in the enthalpy at the same pressure may be increased. Accordingly, refrigeration capacity of the mixed refrigerant composition may be improved.

In some embodiments, the mixed refrigerant composition may not be mixed with any refrigerant other than the carbon dioxide (R-744), 2,3,3,3-tetrafluoropropene (R-1234yf) and 1,1-difluoroethane (R-152a). For example, the mixed refrigerant composition may not include an additional hydrofluorocarbon (HFC)-based refrigerant such as difluoromethane (R-32) having a high global warming potential. Accordingly, the environmental friendliness of the mixed refrigerant composition may be improved. For example, the mixed refrigerant composition may not include an additional hydrofluoroolefin (HFO)-based refrigerant such as 1,1-difluoroethylene (R-1132a) having toxicity to humans. Thereby, even if some of the mixed refrigerant composition flows out from the heat pump, the environmental stability may be retained or not be toxic to human.

In one embodiment, the mixed refrigerant composition may consist only of carbon dioxide (R-744), 2,3,3,3-tetrafluoropropene (R-1234yf) and 1,1-difluoroethane (R-152a). Accordingly, it is possible to prevent the thermal and chemical stabilities of the mixed refrigerant composition from being reduced due to the refrigerant having a low thermal or chemical stability mixed therewith. In addition, it is possible to prevent the condensation temperature from being increased due to the refrigerant having a low vapor pressure mixed therewith, or the refrigeration capacity from being reduced due to the refrigerant having a low evaporative latent heat mixed therewith.

In the present disclosure, a content of the carbon dioxide (R-744) is 1 to 10% by weight ("wt.%"), and may be preferably 1 to 8 wt.%, 1 to 6 wt.%, or 1 to 5 wt.% based on a total weight of the mixed refrigerant composition. When the content of the carbon dioxide (R-744) is less than 1 wt.% based on the total weight of the mixed refrigerant composition, the global warming potential (GWP) of the mixed refrigerant composition may be increased. Accordingly, environmental friendliness may be reduced. When the content of the carbon dioxide (R-744) exceeds 10 wt.% based on the total weight of the mixed refrigerant composition, the refrigeration capacity of the mixed refrigerant composition may be reduced. Thereby, the cooling characteristics of the mixed refrigerant composition may be decreased. Within the above content range, refrigeration performance may not be reduced while decreasing the global warming potential (GWP) of the mixed refrigerant composition. Accordingly, the environmental friendliness and cooling characteristics of the mixed refrigerant composition may be improved.

In some embodiments, the content of the carbon dioxide (R-744) may be 1.5 to 5 wt.%, 2 to 5 wt.%, 3 to 5 wt.%, 4 to 5 wt.%, or 4.5 to 5 wt.% based on the total weight of the mixed refrigerant composition. Within the above content range, the environmental friendliness and cooling characteristics of the mixed refrigerant composition may be further improved.

In the present disclosure, a content of the 2,3,3,3-tetrafluoropropene (R-1234yf) is 65 to 95 wt.%, and may be preferably 70 to 95 wt.%, 70 to 90 wt.%, or 75 to 90 wt.% based on the total weight of the mixed refrigerant composition. When the content of the 2,3,3,3-tetrafluoropropene (R-1234yf) is less than 65 wt.% based on the total weight of the mixed refrigerant composition, the content of the 1,1-difluoroethane (R-152a) may be increased, such that thermal stability may be decreased. In addition, the content of the carbon dioxide (R-744) may be increased, such that cooling capacity may be decreased. When the content of the 2,3,3,3-tetrafluoropropene (R-1234yf) exceeds 95 wt.% based on the total weight of the mixed refrigerant composition, the content of the 1,1-difluoroethane (R-152a) may be decreased, such that the cooling capacity may be reduced. Within the above content range, the thermal stability, cooling capacity, and environmental friendliness of the mixed refrigerant composition may be improved.

In some embodiments, the content of the 2,3,3,3-tetrafluoropropene (R-1234yf) may be 75 to 90 wt.%, 75 to 89 wt.%, 75 to 88 wt.%, 75 to 87 wt.%, or 75 to 85 wt.% based on the total weight of the mixed refrigerant composition. Within the above content range, the thermal stability and refrigeration capacity of the mixed refrigerant composition may be further improved.

According to exemplary embodiments, a content of 1,1-difluoroethane (R-152a) may be 1 to 30 wt.%, 3 to 30 wt.%, or 5 to 30 wt.% based on the total weight of the mixed refrigerant composition. If the content of the 1,1-difluoroethane (R-152a) is less than 1 wt.% based on the total weight of the mixed refrigerant composition, refrigeration capacity may be reduced. If the content of the 1,1-difluoroethane (R-152a) exceeds 30 wt.% based on the total weight of the mixed refrigerant composition, the global warming potential (GWP) value may be increased. Accordingly, the environmental friendliness of the mixed refrigerant composition may be reduced. Within the above range, cooling capacity may be improved while the environmental friendliness of the mixed refrigerant composition is increased.

In some embodiments, the content of the 1,1-difluoroethane (R-152a) may be 10 to 30 wt.%, 10 to 25 wt.%, 13 to 25 wt.%, 15 to 25 wt.%, 15 to 23 wt.%, or 18 to 23 wt.% based on the total weight of the mixed refrigerant composition. Within the above content range, the environmental friendliness of the mixed refrigerant composition is increased, as well as the cooling capacity may be further improved, and the evaporative latent heat of the mixed refrigerant composition may be further increased. Accordingly, the refrigeration capacity may be further increased.

In some embodiments, a ratio of the content of the 2,3,3,3-tetrafluoropropene (R-1234yf) to the content of the carbon dioxide (R-744) based on the total weight of the mixed refrigerant composition may be 6 to 95, 6 to 90, 10 to 85, 10 to 80, or 13 to 80. Within the above range, the thermal stability, environmental friendliness, and refrigeration capacity of the mixed refrigerant composition may be improved.

In one embodiment, the ratio of the content of the 2,3,3,3-tetrafluoropropene (R-1234yf) to the content of the carbon dioxide (R-744) based on the total weight of the mixed refrigerant composition may be 13 to 60, 13 to 45, 13 to 40, 13 to 35, 13 to 30, 13 to 25, 13 to 20, or 13 to 18. Within the above range, the thermal stability, environmental friendliness, and refrigeration capacity of the mixed refrigerant composition may be further improved.

In some embodiments, a ratio of the content of the 1,1-difluoroethane (R-152a) to the content of the carbon dioxide (R-744) based on the total weight of the mixed refrigerant composition may be 0.5 to 30, 25 to 25, 1 to 20, or 1 to 15. Within the above range, the cooling capacity of the mixed refrigerant composition may be improved.

In one embodiment, the ratio of the content of the 1,1-difluoroethane (R-152a) to the content of the carbon dioxide (R-744) based on the total weight of the mixed refrigerant composition may be 1 to 15, 1 to 10, 1 to 7, or 1 to 6. Within the above range, the cooling capacity of the mixed refrigerant composition may be further improved.

In some embodiments, the ratio of the content of the 2,3,3,3-tetrafluoropropene (R-1234yf) to the content of the 1,1-difluoroethane (R-152a) based on the total weight of the mixed refrigerant composition may be 2 to 19, 2 to 18, 2 to 15, 2 to 10, 3 to 10, 3 to 9, or 3 to 6. Within the above range, the thermal stability and refrigeration capacity may be improved.

In one embodiment, the ratio of the content of the 2,3,3,3-tetrafluoropropene (R-1234yf) to the content of the 1,1-difluoroethane (R-152a) based on the total weight of the mixed refrigerant composition may be 3.5 to 6, 3.5 to 5.5, 3.5 to 5.4, 3.5 to 5, or 3.5 to 4. Within the above range, the thermal stability and refrigeration capacity of the mixed refrigerant composition may be further improved.

According to exemplary embodiments, a boiling point at 1 atm of the mixed refrigerant composition may be -65 to -30 °C, -60 to -30 °C, -55 to -34 °C, or -55 °C to -40 °C.

If the boiling point of the mixed refrigerant composition is less than -65 °C, a condensation pressure at the condensation temperature of the mixed refrigerant composition may be increased. Therefore, energy consumed in the refrigeration cycle may be increased, and an efficiency of the refrigerant may be decreased.

If the boiling point of the mixed refrigerant composition exceeds -30 °C, a specific volume at the condensation temperature of the mixed refrigerant composition may be increased. Accordingly, an amount of the mixed refrigerant composition required to improve refrigeration capacity is increased, such that a volume of an air conditioner may be increased.

In some embodiments, a boiling point at 1 atm of the mixed refrigerant composition may be -55 to -45 °C, -53 to -45 °C, or -53 to -48 °C. Within the above boiling point range of the mixed refrigerant composition, the specific volume may be decreased without increasing the condensation pressure. Therefore, the refrigeration capacity of the refrigerant may be improved while reducing the amount of mixed refrigerant composition.

In some embodiments, a critical temperature of the mixed refrigerant composition may be 90 to 100 °C, 95 to 100 °C, 97 to 100 °C, or 97 to 99 °C. The critical temperature refers to a maximum temperature at which a specific substance may exist in a liquid state. If the critical temperature of the refrigerant is low, it may be difficult to liquefy the refrigerant in the refrigeration cycle.

Within the above critical temperature range, the mixed refrigerant composition may not become a supercritical fluid state in the refrigeration cycle. Therefore, it is possible to prevent a portion of the mixed refrigerant composition from reaching the supercritical fluid state to be not liquefied, and thus the refrigeration capacity may be improved.

In some embodiments, a critical pressure of the mixed refrigerant composition may be 30 to 51 bar, 30 to 50 bar, 35 to 50 bar, 35 to 45 bar, 39 to 45 bar, or 40 to 45 bar. The critical pressure refers to a maximum pressure at which a specific substance may exist in a liquid state. If the critical pressure of the refrigerant is high, it may be difficult to liquefy the refrigerant in the refrigeration cycle.

Within the above critical pressure range, the mixed refrigerant composition may not become the supercritical fluid state in the refrigeration cycle. Therefore, it is possible to prevent a portion of the mixed refrigerant composition from not being liquefied, and thus the refrigeration capacity may be improved.

In some embodiments, a temperature glide at a pressure of 1.5 bar of the mixed refrigerant composition may be 3 to 29 °C, 3 to 28 °C, 8 to 27 °C, 10 to 26 °C, 11 to 26 °C, 11 to 25 °C, 11 to 20 °C, or 15 to 20 °C. Within the above temperature glide range, composition separation may not occur even if the mixed refrigerant leaks out. Accordingly, the use capacity of the mixed refrigerant composition may be improved even if a heat pump of the same volume is used.

In some embodiments, the temperature glide at a pressure of 15 bar of the mixed refrigerant composition may be 2 to 23 °C, 2 to 13 °C, 4 to 13 °C, 4.5 to 13 °C, 5 to 13 °C, 6.5 to 13 °C, 9 to 13 °C, or 11 to 13 °C. Within the above temperature glide range, composition separation may not occur even if the mixed refrigerant composition is used in a heat pump. Accordingly, the heat transfer efficiency of the refrigerant may be improved.

In some embodiments, a latent heat at -25 °C of the mixed refrigerant composition may be 150 kJ/kg or higher, or 150 to 250 kJ/kg, 180 to 250 kJ/kg, 180 to 230 kJ/kg, 180 to 220 kJ/kg, 190 to 220 kJ/kg, 195 to 220 kJ/kg, 200 to 215 kJ/kg, or 205 to 215 kJ/kg.

Within the above latent heat range, the heat released or absorbed during the phase change of the mixed refrigerant composition may be sufficient. Accordingly, the thermal efficiency of the mixed refrigerant composition may be improved.

In some embodiments, the global warming potential (GWP) of the mixed refrigerant composition may be 1 to 40, 1 to 30, 5 to 30, 10 to 30, 10 to 28, 15 to 28, or 19 to 28.

The global warming potential (GWP) is a value obtained by calculating a degree of effect on global warming using carbon dioxide ($CO_2$) as a reference material over a certain period of time (for example, 100 years), when 1 kg of any chemical substance is released into the Earth's troposphere.

Within the above global warming potential range, the cooling capacity may be improved while suppressing environmental pollution caused by use and treatment of the mixed refrigerant composition.

In some embodiments, the ozone depleting potential (ODP) of the mixed refrigerant composition may be 0.

The ozone depleting potential (ODP) is a value obtained by calculating a degree of effect on ozone layer destruction by any chemical substance, when assuming that the effect of trichlorofluoromethane (CFC-11) on the ozone layer destruction is 1.

As the ozone depleting potential (ODP) is 0, environmental pollution caused by use and treatment of the mixed refrigerant composition may be suppressed.

In some embodiments, the mixed refrigerant composition may be non-flammable. For example, the mixed refrigerant composition may have a flammability of Class A2L in the refrigerant safety group classification of the American Society of Heating, Refrigerating and Air-Conditioning Engineers (ASHRAE). Accordingly, stability during operation and leakage of the heat pump may be improved.

According to exemplary embodiments, the heat pump includes the mixed refrigerant composition. Accordingly, the refrigeration performance of the heat pump may be enhanced, while improving the environmental friendliness and stability.

The heat pump may include a compressor 10, a condenser 18, an expansion valve 14, 20 and an evaporator 16. In the compressor 10, the above-described mixed refrigerant composition may be compressed to a high temperature and high pressure state, and in the expansion valve 14, 20, the above-described mixed refrigerant composition may be expanded to a low temperature and low pressure state.

For example, the above-described mixed refrigerant composition may emit or absorb heat while circulating through the compressor 10, the condenser 18, the expansion valve 14, 20, and the evaporator 16 inside the heat pump. The mixed refrigerant composition may be maintained in a gaseous state at high temperature and high pressure in the compressor 10. The mixed refrigerant composition may be liquefied into a liquid state by releasing the heat in the condenser 18. The mixed refrigerant composition may be maintained in a low-temperature and low-pressure liquid state, or a mixture state of liquid and gas in the expansion valve 14, 20. The mixed refrigerant composition may absorb the heat to be vaporized into a gaseous state in the evaporator 10.

In some embodiments, the heat pump may contain oil. For example, the oil may include paraffin, naphthene, aromatic hydrocarbon, polyester (POE), polyol ester, mineral oil, alkylbenzene (AB), and polyalkylene glycol (PAG), polyvinyl ether (PVE) and the like. Accordingly, friction and wear of the heat pump may be prevented.

In some embodiments, a coefficient of performance (COP) of the heat pump may be 1 to 10. The coefficient of performance (COP) refers to a ratio of an amount of heat effectively gained to an amount of work input when operating the heat pump.

A highly efficient heat pump having the coefficient of performance in the above range may be provided using the above-described refrigerant.

Hereinafter, experimental examples including specific examples and comparative examples are proposed to facilitate understanding of the present invention.

## Examples and Comparative Examples

### (1) Mixed refrigerant composition

Mixed refrigerant compositions having the components and contents (wt.%) shown in Table 1 below were prepared.

The boiling point, critical temperature, critical pressure, temperature glide at 1.5 bar and 15 bar, and latent heat at -25 °C of each of the prepared mixed refrigerant compositions were measured. The measured boiling points, critical temperatures, critical pressure, temperature glides at 1.5 bar and 15 bar, and latent heats at -25 °C of the mixed refrigerant compositions are shown in Table 1.

The boiling point, critical temperature, critical pressure, temperature glide, and latent heat of the mixed refrigerant composition were measured using REFPROP (Ver 10, NIST).

[TABLE 1]

| Item | Content of each component of mixed refrigerant composition (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1234yf | R-152a | | | | at 1.5 bar (°C) | at 15 bar (°C) | |
| Example 1 | 1 | 94 | 5 | -35.587 | 96.069 | 36.306 | 4.873 | 2.418 | 186.00 |
| Example 2 | 1 | 89 | 10 | -35.338 | 96.603 | 36.873 | 4.666 | 2.359 | 192.95 |
| Example 3 | 1 | 84 | 15 | -35.082 | 97.199 | 37.431 | 4.502 | 2.304 | 199.97 |
| Example 4 | 1 | 79 | 20 | -34.819 | 97.861 | 37.986 | 4.385 | 2.262 | 207.10 |
| Example 5 | 2 | 93 | 5 | -40.701 | 96.569 | 37.976 | 9.264 | 4.909 | 187.30 |
| Example 6 | 2 | 88 | 10 | -40.266 | 97.017 | 38.478 | 8.899 | 4.780 | 194.25 |
| Example 7 | 2 | 83 | 15 | -39.851 | 97.528 | 38.971 | 8.601 | 4.668 | 201.31 |
| Example 8 | 2 | 78 | 20 | -39.454 | 98.128 | 38.476 | 8.373 | 4.575 | 208.45 |
| Example 9 | 3 | 92 | 5 | -45.172 | 96.914 | 39.571 | 13.135 | 7.432 | 188.57 |
| Example 10 | 3 | 87 | 10 | -44.609 | 97.298 | 40.018 | 12.657 | 7.228 | 195.56 |
| Example 11 | 3 | 82 | 15 | -44.079 | 97.757 | 40.463 | 12.262 | 7.052 | 202.64 |
| Example 12 | 3 | 77 | 20 | -43.583 | 98.285 | 40.905 | 11.953 | 6.910 | 209.80 |
| Example 13 | 4 | 91 | 5 | -49.056 | 97.121 | 41.093 | 16.503 | 9.933 | 189.83 |
| Example 14 | 4 | 86 | 10 | -48.406 | 97.458 | 41.493 | 15.950 | 9.656 | 196.84 |
| Example 15 | 4 | 81 | 15 | -47.797 | 97.870 | 41.893 | 15.489 | 9.417 | 203.95 |
| Example 16 | 4 | 76 | 20 | -47.230 | 98.376 | 42.308 | 15.123 | 9.221 | 211.14 |
| Example 17 | 5 | 90 | 5 | -52.428 | 97.257 | 42.589 | 19.411 | 12.373 | 191.09 |
| Example 18 | 5 | 85 | 10 | -51.721 | 97.554 | 42.945 | 18.810 | 12.024 | 198.13 |
| Example 19 | 5 | 80 | 15 | -51.058 | 97.924 | 43.298 | 18.310 | 11.724 | 205.25 |
| Example 20 | 5 | 75 | 20 | -50.443 | 98.376 | 43.661 | 17.909 | 11.481 | 212.47 |
| Example 21 | 5 | 65 | 30 | -49.343 | 99.516 | 44.424 | 17.388 | 11.146 | 227.17 |
| Comparative Example 1 | 0 | 100 | 0 | -29.7 | 94.7 | 33.8 | 0 | 0 | 177.9 |
| Comparative Example 2 | 5 | 55 | 40 | -48.389 | 100.9 | 45.209 | 17.18 | 11.003 | 242.23 |

(continued)

| Item | Content of each component of mixed refrigerant composition (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1234yf | R-152a | | | | at 1.5 bar (°C) | at 15 bar (°C) | |
| Comparative Example 3 | 10 | 60 | 30 | -60.462 | 98.617 | 50.487 | 26.812 | 20.608 | 233.93 |
| Comparative Example 4 | 10 | 50 | 40 | -59.363 | 99.857 | 51.014 | 26.61 | 20.293 | 249.18 |
| Comparative Example 5 | 15 | 75 | 10 | -69.598 | 95.428 | 55.71 | 32.767 | 28.813 | 210.78 |
| Comparative Example 6 | 15 | 55 | 30 | -66.973 | 96.902 | 55.971 | 31.717 | 27.193 | 240.66 |

The specific components described in Table 1 are as follows.

R-744: Carbon dioxide

R-1234yf: 2,3,3,3-tetrafluoropropene

R-152a: 1,1-difluoroethane

**Experiment example**

**(1) GWP calculation**

Based on the global warming potential (GWP) according to the Intergovernmental Panel on Climate Change (IPCC) of R-744, R-1234yf and R-152a included in the mixed refrigerant composition according to the embodiments, the global warming potentials (GWPs) of the mixed refrigerant compositions were calculated by calculating an arithmetic mean according to the weight ratio of each of R-744, R-1234yf and R-152a.

The global warming potential (GWP) according to the IPCC was based on the global warming potential (GWP) on the basis of 100 years.

The calculated global warming potentials (GWPs) are shown in Table 2 below.

[TABLE 2]

| Item | Global warming potential (GWP) |
|---|---|
| Example 1 | 7.15 |
| Example 2 | 13.30 |
| Example 3 | 19.45 |
| Example 4 | 25.6 |
| Example 5 | 7.15 |
| Example 6 | 13.30 |
| Example 7 | 19.45 |
| Example 8 | 25.60 |
| Example 9 | 7.15 |
| Example 10 | 13.30 |
| Example 11 | 19.45 |
| Example 12 | 25.60 |

(continued)

| Item | Global warming potential (GWP) |
| --- | --- |
| Example 13 | 7.15 |
| Example 14 | 13.30 |
| Example 15 | 19.45 |
| Example 16 | 25.60 |
| Example 17 | 7.15 |
| Example 18 | 13.30 |
| Example 19 | 19.45 |
| Example 20 | 25.60 |
| Example 21 | 37.90 |
| Comparative Example 1 | 1 |
| Comparative Example 2 | 50.2 |
| Comparative Example 3 | 37.9 |
| Comparative Example 4 | 50.2 |
| Comparative Example 5 | 13.3 |
| Comparative Example 6 | 37.9 |

### (2) Cooling evaluation

FIGS. 1 and 2 are schematic views illustrating the flow of a mixed refrigerant for heat exchange in a cooling mode or a heating mode of a heat exchanger according to exemplary embodiments, respectively.

The flow of the mixed refrigerant is shown by using directions of the arrows in FIGS. 1 and 2.

Referring to FIG. 1, in the cooling mode, the mixed refrigerant is compressed through a compressor 10, bypasses an internal condenser 18 and an expansion valve (heating) 14 in turn, releases heat in an external condenser 12, then expands in the expansion valve (cooling) 20, and reabsorbs the heat through an evaporator 16.

Referring to FIG. 2, in the heating mode, the mixed refrigerant is compressed through the compressor 10, releases heat in the internal condenser 18, expands in the expansion valve (heating) 14, absorbs heat from the external condenser 12, and then further absorbs the heat through a cooler 22.

The process diagram of FIGS. 1 and 2 further shows valve 24 which can route the refrigerant to either the expansion valve (cooling) 20 during the cooling mode or through the cooler 22 during the heating mode. A motor inverter 26 is used for improved energy efficiency by allowing the speed of the cooler system's motor to be adjusted based on the cooling demand. The system also includes an accumulator 28 before the compressor 10 for ensuring that that only refrigerant vapor enters the compressor 10. The system may also include a battery 30 and a PTC heater 32. The battery 30 is used as a primary or back up power source for the various components of the system and may, for example, power the PTC heater for defrosting evaporator coils etc.

Cooling evaluation and heating evaluation were performed using the refrigerant combinations of Examples 1 to 21 and Comparative Examples 1 to 6 through the above-described heat exchanger at different outside air temperatures.

The cooling evaluation was performed by setting the outside air temperature to 45 °C, and the heating evaluation was performed by setting the outside air temperature to -7 °C and -20 °C, respectively. Conditions for cooling evaluation and heating evaluation according to the above-described examples and comparative examples are shown in Table 3 below.

Specifically, the outside air temperature (°C), refrigerant temperature at a condenser outlet, refrigerant supercooling degree at the condenser outlet, refrigerant temperature at an evaporator outlet, and refrigerant superheating degree at the evaporator outlet are shown in Table 3 below together.

[TABLE 3]

| Item | Operation mode | Outside air temperature (°C) | Refrigerant temperature at condenser outlet (°C) | Refrigerant supercooling degree at condenser outlet (°C) | Refrigerant temperature at evaporator outlet (°C) | Refrigerant superheating degree at evaporator outlet (°C) |
|---|---|---|---|---|---|---|
| Example 1 | Cooling | 45 | 55 | 10 | 10 | 8 |
| Example 1 | Heating | -7 | 40 | 10 | -20 | 1 |
| Example 1 | Heating | -20 | 20 | 10 | -29 | 1 |
| Example 2 | Cooling | 45 | 55 | 10 | 10 | 8 |
| Example 2 | Heating | -7 | 40 | 10 | -20 | 1 |
| Example 2 | Heating | -20 | 20 | 10 | -29 | 1 |
| Example 3 | Cooling | 45 | 55 | 10 | 10 | 8 |
| Example 3 | Heating | -7 | 40 | 10 | -20 | 1 |
| Example 3 | Heating | -20 | 20 | 10 | -29 | 1 |
| Example 4 | Cooling | 45 | 55 | 10 | 10 | 8 |
| Example 4 | Heating | -7 | 40 | 10 | -20 | 1 |
| Example 4 | Heating | -20 | 20 | 10 | -29 | 1 |
| Example 5 | Cooling | 45 | 55 | 10 | 10 | 8 |
| Example 5 | Heating | -7 | 40 | 10 | -20 | 1 |
| Example 5 | Heating | -20 | 20 | 10 | -29 | 1 |
| Example 6 | Cooling | 45 | 55 | 10 | 10 | 8 |
| Example 6 | Heating | -7 | 40 | 10 | -20 | 1 |
| Example 6 | Heating | -20 | 20 | 10 | -29 | 1 |
| Example 7 | Cooling | 45 | 55 | 10 | 10 | 8 |
| Example 7 | Heating | -7 | 40 | 10 | -20 | 1 |
| Example 7 | Heating | -20 | 20 | 10 | -29 | 1 |
| Example 8 | Cooling | 45 | 55 | 10 | 10 | 8 |
| Example 8 | Heating | -7 | 40 | 10 | -20 | 1 |
| Example 8 | Heating | -20 | 20 | 10 | -29 | 1 |
| Example 9 | Cooling | 45 | 55 | 10 | 10 | 8 |
| Example 9 | Heating | -7 | 40 | 10 | -20 | 1 |
| Example 9 | Heating | -20 | 20 | 10 | -29 | 1 |
| Example 10 | Cooling | 45 | 55 | 10 | 10 | 8 |
| Example 10 | Heating | -7 | 40 | 10 | -20 | 1 |
| Example 10 | Heating | -20 | 20 | 10 | -29 | 1 |
| Example 11 | Cooling | 45 | 55 | 10 | 10 | 8 |
| Example 11 | Heating | -7 | 40 | 10 | -20 | 1 |
| Example 11 | Heating | -20 | 20 | 10 | -29 | 1 |
| Example 12 | Cooling | 45 | 55 | 10 | 10 | 8 |
| Example 12 | Heating | -7 | 40 | 10 | -20 | 1 |
| Example 12 | Heating | -20 | 20 | 10 | -29 | 1 |

(continued)

| Item | Operation mode | Outside air temperature (°C) | Refrigerant temperature at condenser outlet (°C) | Refrigerant supercooling degree at condenser outlet (°C) | Refrigerant temperature at evaporator outlet (°C) | Refrigerant superheating degree at evaporator outlet (°C) |
|---|---|---|---|---|---|---|
| Example 13 | Cooling | 45 | 55 | 10 | 10 | 8 |
| Example 13 | Heating | -7 | 40 | 10 | -20 | 1 |
| Example 13 | Heating | -20 | 20 | 10 | -29 | 1 |
| Example 14 | Cooling | 45 | 55 | 10 | 10 | 8 |
| Example 14 | Heating | -7 | 40 | 10 | -20 | 1 |
| Example 14 | Heating | -20 | 20 | 10 | -29 | 1 |
| Example 15 | Cooling | 45 | 55 | 10 | 10 | 8 |
| Example 15 | Heating | -7 | 40 | 10 | -20 | 1 |
| Example 15 | Heating | -20 | 20 | 10 | -29 | 1 |
| Example 16 | Cooling | 45 | 55 | 10 | 10 | 8 |
| Example 16 | Heating | -7 | 40 | 10 | -20 | 1 |
| Example 16 | Heating | -20 | 20 | 10 | -29 | 1 |
| Example 17 | Cooling | 45 | 55 | 10 | 10 | 8 |
| Example 17 | Heating | -7 | 40 | 10 | -20 | 1 |
| Example 17 | Heating | -20 | 20 | 10 | -29 | 1 |
| Example 18 | Cooling | 45 | 55 | 10 | 10 | 8 |
| Example 18 | Heating | -7 | 40 | 10 | -20 | 1 |
| Example 18 | Heating | -20 | 20 | 10 | -29 | 1 |
| Example 19 | Cooling | 45 | 55 | 10 | 10 | 8 |
| Example 19 | Heating | -7 | 40 | 10 | -20 | 1 |
| Example 19 | Heating | -20 | 20 | 10 | -29 | 1 |
| Example 20 | Cooling | 45 | 55 | 10 | 10 | 8 |
| Example 20 | Heating | -7 | 40 | 10 | -20 | 1 |
| Example 20 | Heating | -20 | 20 | 10 | -29 | 1 |
| Example 21 | Cooling | 45 | 55 | 10 | 10 | 8 |
| Example 21 | Heating | -7 | 40 | 10 | -20 | 1 |
| Example 21 | Heating | -20 | 20 | 10 | -29 | 1 |
| Comparative Example 1 | Cooling | 45 | 55 | 10 | 10 | 8 |
| Comparative Example 1 | Heating | -7 | 40 | 10 | -20 | 1 |
| Comparative Example 1 | Heating | -20 | 20 | 10 | -29 | 1 |
| Comparative Example 2 | Cooling | 45 | 55 | 10 | 10 | 8 |
| Comparative Example 2 | Heating | -7 | 40 | 10 | -20 | 1 |

(continued)

| Item | Operation mode | Outside air temperature (°C) | Refrigerant temperature at condenser outlet (°C) | Refrigerant supercooling degree at condenser outlet (°C) | Refrigerant temperature at evaporator outlet (°C) | Refrigerant superheating degree at evaporator outlet (°C) |
|---|---|---|---|---|---|---|
| Comparative Example 2 | Heating | -20 | 20 | 10 | -29 | 1 |
| Comparative Example 3 | Cooling | 45 | 55 | 10 | 10 | 8 |
| Comparative Example 3 | Heating | -7 | 40 | 10 | -20 | 1 |
| Comparative Example 3 | Heating | -20 | 20 | 10 | -29 | 1 |
| Comparative Example 4 | Cooling | 45 | 55 | 10 | 10 | 8 |
| Comparative Example 4 | Heating | -7 | 40 | 10 | -20 | 1 |
| Comparative Example 4 | Heating | -20 | 20 | 10 | -29 | 1 |
| Comparative Example 5 | Cooling | 45 | 55 | 10 | 10 | 8 |
| Comparative Example 5 | Heating | -7 | 40 | 10 | -20 | 1 |
| Comparative Example 5 | Heating | -20 | 20 | 10 | -29 | 1 |
| Comparative Example 6 | Cooling | 45 | 55 | 10 | 10 | 8 |
| Comparative Example 6 | Heating | -7 | 40 | 10 | -20 | 1 |
| Comparative Example 6 | Heating | -20 | 20 | 10 | -29 | 1 |

Cooling and heating analysis for the refrigerant combinations of the examples and comparative examples shown in Table 3 were verified through the 0D analysis program CycleD (provided by NIST). Specifically, volumetric capacity, temperature and pressure at the compressor outlet were evaluated through the cooling and heating analysis.

The volumetric capacity was calculated using Equation 1 below.

[Equation 1]

$$\text{Volumetric capacity} = \frac{\text{Cooling performance (or heating performance) per unit mass}}{\text{Refrigerant specific volume}} \times \text{Compressor volumetric efficiency}$$

Evaluation results are shown in Tables 4 to 6 below.

[TABLE 4]

| Cooling evaluation (Outside air temperature: 45 °C) | | | |
|---|---|---|---|
| Item | Volumetric capacity (kJ/m$^3$) | Pressure at compressor outlet (kPaA) | Temperature at compressor outlet (°C) |
| Example 1 | 2618.9 | 1597.1 | 71.2 |

(continued)

| Cooling evaluation (Outside air temperature: 45 °C) | | | |
|---|---|---|---|
| Item | Volumetric capacity (kJ/m$^3$) | Pressure at compressor outlet (kPaA) | Temperature at compressor outlet (°C) |
| Example 2 | 2651.2 | 1601.7 | 72.3 |
| Example 3 | 2678.2 | 1603.8 | 73.4 |
| Example 4 | 2699.9 | 1603.7 | 74.6 |
| Example 5 | 2654.6 | 1722.7 | 74.2 |
| Example 6 | 2686.5 | 1724.4 | 75.3 |
| Example 7 | 2712.7 | 1723.9 | 76.4 |
| Example 8 | 2733.5 | 1721.3 | 77.6 |
| Example 9 | 2690.5 | 1851.0 | 77.1 |
| Example 10 | 2721.8 | 1849.7 | 78.2 |
| Example 11 | 2747.6 | 1846.3 | 79.3 |
| Example 12 | 2767.2 | 1841.3 | 80.4 |
| Example 13 | 2726.5 | 1981.2 | 79.9 |
| Example 14 | 2757.2 | 1976.8 | 81.0 |
| Example 15 | 2782.4 | 1970.6 | 82.1 |
| Example 16 | 2801.3 | 1962.9 | 83.3 |
| Example 17 | 2762.8 | 2112.7 | 82.6 |
| Example 18 | 2793.1 | 2105.1 | 83.7 |
| Example 19 | 2817.5 | 2096.1 | 84.9 |
| Example 20 | 2835.4 | 2085.7 | 86.0 |
| Example 21 | 2853.7 | 2062.0 | 88.4 |
| Comparative Example 1 | 2545.5 | 1464.7 | 67.0 |
| Comparative Example 2 | 2856.8 | 2035.0 | 91.0 |
| Comparative Example 3 | 3017.9 | 2652.2 | 100.7 |
| Comparative Example 4 | 3001.3 | 2603.6 | 103.6 |
| Comparative Example 5 | 3174.2 | 3368.8 | 105.4 |
| Comparative Example 6 | 3190.1 | 3220.8 | 110.9 |

[TABLE 5]

| Heating evaluation (Outside air temperature: -7 °C) | | | |
|---|---|---|---|
| Item | Volumetric capacity (kJ/m$^3$) | Pressure at compressor outlet (kPaA) | Temperature at compressor outlet (°C) |
| Example 1 | 1369.8 | 1128.4 | 56.5 |
| Example 2 | 1385.6 | 1130.1 | 58.3 |
| Example 3 | 1398.2 | 1130.2 | 60.1 |
| Example 4 | 1407.3 | 1128.8 | 61.9 |
| Example 5 | 1410.5 | 1234.8 | 60.3 |
| Example 6 | 1425.6 | 1233.7 | 62.1 |
| Example 7 | 1437.0 | 1231.1 | 63.8 |

(continued)

| Heating evaluation (Outside air temperature: -7 °C) | | | |
|---|---|---|---|
| Item | Volumetric capacity (kJ/m$^3$) | Pressure at compressor outlet (kPaA) | Temperature at compressor outlet (°C) |
| Example 8 | 1445.3 | 1227.4 | 65.6 |
| Example 9 | 1450.9 | 1343.3 | 63.9 |
| Example 10 | 1465.3 | 1339.3 | 65.6 |
| Example 11 | 1476.3 | 1334.1 | 67.4 |
| Example 12 | 1483.2 | 1328.0 | 69.2 |
| Example 13 | 1491.4 | 1453.3 | 67.4 |
| Example 14 | 1505.1 | 1446.3 | 69.1 |
| Example 15 | 1514.8 | 1438.5 | 70.9 |
| Example 16 | 1521.0 | 1429.9 | 72.7 |
| Example 17 | 1532.0 | 1564.0 | 70.7 |
| Example 18 | 1544.6 | 1554.2 | 72.4 |
| Example 19 | 1553.1 | 1543.6 | 74.2 |
| Example 20 | 1558.8 | 1532.5 | 76.1 |
| Example 21 | 1558.2 | 1509.3 | 79.9 |
| Comparative Example 1 | 1309.4 | 1018.4 | 50.8 |
| Comparative Example 2 | 1548.3 | 1484.9 | 84.0 |
| Comparative Example 3 | 1734.1 | 1998.5 | 95.1 |
| Comparative Example 4 | 1709.2 | 1954.8 | 99.5 |
| Comparative Example 5 | 1944.1 | 2603.6 | 99.3 |
| Comparative Example 6 | 1909.7 | 2465.4 | 107.8 |

[TABLE 6]

| Heating evaluation (Outside air temperature: -20 °C) | | | |
|---|---|---|---|
| Item | Volumetric capacity (kJ/m$^3$) | Pressure at compressor outlet (kPaA) | Temperature at compressor outlet (°C) |
| Example 1 | 1060.3 | 673.2 | 39.3 |
| Example 2 | 1067.9 | 672.7 | 40.9 |
| Example 3 | 1073.1 | 671.4 | 42.6 |
| Example 4 | 1075.6 | 669.2 | 44.3 |
| Example 5 | 1093.8 | 753.6 | 43.7 |
| Example 6 | 1100.7 | 750.6 | 45.3 |
| Example 7 | 1105.1 | 747.0 | 47.0 |
| Example 8 | 1106.8 | 742.9 | 48.7 |
| Example 9 | 1127.0 | 835.3 | 47.9 |
| Example 10 | 1133.1 | 829.9 | 49.5 |
| Example 11 | 1136.7 | 824.1 | 51.1 |
| Example 12 | 1137.3 | 817.9 | 52.8 |
| Example 13 | 1159.7 | 918.0 | 51.8 |

(continued)

| Heating evaluation (Outside air temperature: -20 °C) | | | |
|---|---|---|---|
| Item | Volumetric capacity (kJ/m$^3$) | Pressure at compressor outlet (kPaA) | Temperature at compressor outlet (°C) |
| Example 14 | 1165.1 | 910.1 | 53.4 |
| Example 15 | 1167.8 | 902.0 | 55.0 |
| Example 16 | 1167.5 | 893.8 | 56.7 |
| Example 17 | 1192.1 | 1000.9 | 55.5 |
| Example 18 | 1196.8 | 990.7 | 57.1 |
| Example 19 | 1198.7 | 980.3 | 58.7 |
| Example 20 | 1197.6 | 970.1 | 60.5 |
| Example 21 | 1187.6 | 950.0 | 64.2 |
| Comparative Example 1 | 1014.9 | 591.7 | 32.9 |
| Comparative Example 2 | 1170.1 | 930.5 | 68.1 |
| Comparative Example 3 | 1324.0 | 1309.3 | 80.6 |
| Comparative Example 4 | 1294.3 | 1274.5 | 85.0 |
| Comparative Example 5 | 1508.9 | 1761.1 | 85.6 |
| Comparative Example 6 | 1458.1 | 1647.3 | 94.0 |

Referring to Table 4, in the examples within the scope of the present disclosure, the volumetric capacity in the cooling evaluation (outside air temperature of 45 °C) was 2618.9 kJ/m$^3$ or more, and the temperature at the compressor outlet was 88.4 °C or lower.

The volumetric capacity is an amount of energy that the refrigerant can include per unit volume. The larger the volumetric capacity, the lager the amount of energy that the same volume of refrigerant can move, thus it is a refrigerant with good air conditioning performance.

In the case of Comparative Example 1 using R-1234yf alone, the volumetric capacity was decreased compared to the examples.

Referring to Comparative Examples 3 and 4, when including R-152a in an amount of 30 wt.% or more based on the total weight of the mixed refrigerant composition, it shown a tendency for the cooling volumetric capacity to converge, whereas for the pressure and temperature at the compressor outlet to be increased.

Referring to the comparative examples, when increasing the content of R-744, it shown a tendency for the pressure and temperature at the compressor outlet to be increased.

Referring to Table 5, in the examples within the scope of the present disclosure, the volumetric capacity in the heating evaluation (outside air temperature of -7 °C) was 1369.8 kJ/m$^3$ or more, and the temperature at the compressor outlet was 79.9 °C or lower.

In the case of Comparative Example 1 using R-1234yf alone, the volumetric capacity was decreased compared to the examples.

Referring to Comparative Examples 3 and 4, when including R-152a in an amount of 30 wt.% or more based on the total weight of the mixed refrigerant composition, it shown a tendency for the cooling volumetric capacity to converge, whereas for the pressure and temperature at the compressor outlet to be increased.

Referring to the comparative examples, when increasing the content of R-744, it shown a tendency for the pressure and temperature at the compressor outlet to be increased.

Referring to Table 6, in the examples within the scope of the present disclosure, the volumetric capacity in the heating evaluation (outside air temperature of -20 °C) was 1060.3 kJ/m$^3$ or more, and the temperature at the compressor outlet was 64.2 °C or lower.

In the case of Comparative Example 1 using R-1234yf alone, the volumetric capacity was decreased compared to the examples.

Referring to Comparative Examples 3 and 4, when including R-152a in an amount of 30 wt.% or more based on the total weight of the mixed refrigerant composition, it shown a tendency for the cooling volumetric capacity to converge, whereas for the pressure and temperature at the compressor outlet to be increased.

Referring to the comparative examples, when increasing the content of R-744, it shown a tendency for the pressure and temperature at the compressor outlet to be increased.

Referring to the results shown in Tables 5 to 7, it is preferable to use the mixed refrigerant including all of R-744, R-1234yf and R-152a rather than the case of using a refrigerant including R-1234yf alone. In addition, it is preferable to limit the maximum content of R-744 to 10 wt.% based on the total weight of the mixed refrigerant composition.

In addition, further considering the fact that the GWP is increased when increasing the content of R-152a, it is preferable to limit the maximum content of R-152a to 30 wt.% based on the total weight of the mixed refrigerant composition.

**Claims**

1. A mixed refrigerant composition comprising carbon dioxide (R-744), 2,3,3,3-tetrafluoropropene (R-1234yf) and 1,1-difluoroethane (R-152a),

    wherein a content of the carbon dioxide (R-744) is 1 to 10% by weight based on a total weight of the mixed refrigerant composition,
    a content of the 2,3,3,3-tetrafluoropropene (R-1234yf) is 65 to 95% by weight based on the total weight of the mixed refrigerant composition,
    a content of the 1,1-difluoroethane (R-152a) is 1 to 30% by weight based on the total weight of the mixed refrigerant composition, and
    a boiling point at 1 atm of the mixed refrigerant composition is -65 to -30 °C.

2. The mixed refrigerant composition according to claim 1, wherein the content of the carbon dioxide (R-744) is 1 to 5%, 1.5 to 5 %, 2 to 5 %, 3 to 5 %, 4 to 5% or 4.5 to 5 %.

3. The mixed refrigerant composition according to claim 1 or 2, wherein the mixed refrigerant composition does not include an additional hydrofluorocarbon (HFC)-based refrigerant, specifically does not include difluoromethane (R-32);
    and/or the mixed refrigerant composition does not include an additional hydrofluoroolefin (HFO)-based refrigerant, specifically does not include 1,1-difluoroethylene (R-1132a).

4. The mixed refrigerant composition according to any one of claims 1 to 3, wherein the mixed refrigerant composition consists of the carbon dioxide (R-744), the 2,3,3,3-tetrafluoropropene (R-1234yf), and the 1,1-difluoroethane (R-152a).

5. The mixed refrigerant composition according to any one of claims 1 to 3, wherein the content of the 1,1-difluoroethane (R-152a) is 5 to 30 %, 10 to 30 %, or 13 to 25% by weight based on the total weight of the mixed refrigerant composition.

6. The mixed refrigerant composition according to any one of claims 1 to 5, wherein the content of the 1,1-difluoroethane (R-152a) is 15 to 25 %, 15 to 23 %, 5 to 20%, or 18 to 23% by weight based on the total weight of the mixed refrigerant composition.

7. The mixed refrigerant composition according to any one of claims 1 to 6, wherein a ratio of the content of the 2,3,3,3-tetrafluoropropene (R-1234yf) to the content of the carbon dioxide (R-744) based on the total weight of the mixed refrigerant composition is 6 to 95.

8. The mixed refrigerant composition according to any one of claims 1 to 7, wherein a ratio of the content of the 1,1-difluoroethane (R-152a) to the content of the carbon dioxide (R-744) based on the total weight of the mixed refrigerant composition is 0.5 to 30.

9. The mixed refrigerant composition according to any one of claims 1 to 8, wherein a ratio of the content of the 2,3,3,3-tetrafluoropropene (R-1234yf) to the content of the 1,1-difluoroethane (R-152a) based on the total weight of the mixed refrigerant composition is 2 to 19.

10. The mixed refrigerant composition according to any one of claims 1 to 10, wherein a critical temperature of the mixed refrigerant composition is 90 to 100 °C.

11. The mixed refrigerant composition according to any one of claims 1 to 10, wherein a critical pressure of the mixed refrigerant composition is 30 to 51 bar or 30 to 45 bar.

12. The mixed refrigerant composition according to any one of claims 1 to 11, wherein a temperature glide at a pressure of 1.5 bar of the mixed refrigerant composition is 3 to 29 °C; and/or
    wherein a temperature glide at a pressure of 15 bar of the mixed refrigerant composition is 2 to 23 °C.

13. The mixed refrigerant composition according to any one of claims 1 to 12, wherein a latent heat at -25 °C of the mixed refrigerant composition is 150 kJ/kg or higher, or 150 to 250 kJ/kg.

14. The mixed refrigerant composition according to any one of claims 1 to 13, having one or more of the following characteristics (i) to (iii), respectively alone or in combination:

    (i) a global warming potential (GWP) of the mixed refrigerant composition is 1 to 40;
    (ii) an ozone depleting potential (ODP) of 0; and/or
    (iii) a flammability of Class A2L or lower in the refrigerant safety group classification of The American Society of Heating, Refrigerating and Air-Conditioning Engineers (ASHRAE)..

15. A heat pump comprising the mixed refrigerant composition according to any one of claims 1 to 14.

[FIG. 1]

[FIG. 2]

<table>
<tr><td>Europäisches Patentamt<br>European Patent Office<br>Office européen des brevets</td><td>**EUROPEAN SEARCH REPORT**</td><td>Application Number<br><br>EP 24 19 4661</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2018/057723 A1 (SAKOWICZ EDWARD STANLEY [US] ET AL) 1 March 2018 (2018-03-01)<br>* paragraphs [0005] - [0013], [0017] *<br>* claim 5 * | 1,2,4,5,<br>7-15<br><br>3,6 | INV.<br>C09K5/04<br>F25B9/00 |
| A | US 2022/127507 A1 (LOW ROBERT [GB])<br>28 April 2022 (2022-04-28)<br>* the whole document * | 1-15 | |
| A | US 2006/243944 A1 (MINOR BARBARA H [US] ET AL) 2 November 2006 (2006-11-02)<br>* claim 3 * | 1-15 | |

TECHNICAL FIELDS SEARCHED (IPC)

C09K
F25B

The present search report has been drawn up for all claims

| Place of search | Date of completion of the search | Examiner |
|---|---|---|
| The Hague | 3 January 2025 | Puetz, Christine |

EPO FORM 1503 03.82 (P04C01)

## ANNEX TO THE EUROPEAN SEARCH REPORT
## ON EUROPEAN PATENT APPLICATION NO.

EP 24 19 4661

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2025

| Patent document cited in search report | Publication date | Patent family member(s) | Publication date |
|---|---|---|---|
| US 2018057723 A1 | 01-03-2018 | CN 107779174 A | 09-03-2018 |
| | | DE 102017119218 A1 | 01-03-2018 |
| | | US 2018057723 A1 | 01-03-2018 |
| US 2022127507 A1 | 28-04-2022 | AU 2020221673 A1 | 12-08-2021 |
| | | AU 2020222044 A1 | 19-08-2021 |
| | | BR 112021015642 A2 | 05-10-2021 |
| | | BR 112021015647 A2 | 09-11-2021 |
| | | CA 3129573 A1 | 20-08-2020 |
| | | CA 3129574 A1 | 20-08-2020 |
| | | CN 113661224 A | 16-11-2021 |
| | | CN 113677774 A | 19-11-2021 |
| | | DK 3924443 T3 | 19-08-2024 |
| | | EP 3924442 A1 | 22-12-2021 |
| | | EP 3924443 A1 | 22-12-2021 |
| | | ES 2990234 T3 | 29-11-2024 |
| | | JP 7530907 B2 | 08-08-2024 |
| | | JP 2022531819 A | 12-07-2022 |
| | | JP 2022537476 A | 26-08-2022 |
| | | KR 20210124990 A | 15-10-2021 |
| | | KR 20210125005 A | 15-10-2021 |
| | | SG 11202108266P A | 30-08-2021 |
| | | SG 11202108460V A | 29-09-2021 |
| | | US 2022127507 A1 | 28-04-2022 |
| | | US 2024352297 A1 | 24-10-2024 |
| | | WO 2020165569 A1 | 20-08-2020 |
| | | WO 2020165571 A1 | 20-08-2020 |
| US 2006243944 A1 | 02-11-2006 | AR 053689 A1 | 16-05-2007 |
| | | AR 087396 A2 | 19-03-2014 |
| | | AR 087397 A2 | 19-03-2014 |
| | | AR 087398 A2 | 19-03-2014 |
| | | AR 087399 A2 | 19-03-2014 |
| | | AU 2006218376 A1 | 08-09-2006 |
| | | BR PI0607994 A2 | 03-11-2009 |
| | | BR 122017022747 B1 | 16-11-2021 |
| | | BR 122017022758 B1 | 09-11-2021 |
| | | BR 122017022761 B1 | 09-11-2021 |
| | | BR 122017022767 B1 | 16-11-2021 |
| | | BR 122017022773 B1 | 21-09-2021 |
| | | CA 2600319 A1 | 08-09-2006 |
| | | CA 2922169 A1 | 08-09-2006 |
| | | CA 2930803 A1 | 08-09-2006 |
| | | CA 3011127 A1 | 08-09-2006 |
| | | CA 3011132 A1 | 08-09-2006 |
| | | CA 3011137 A1 | 08-09-2006 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 19 4661

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2025

| Patent document cited in search report | Publication date | Patent family member(s) | | Publication date |
|---|---|---|---|---|
| | | CA | 3011143 A1 | 08-09-2006 |
| | | CN | 105219350 A | 06-01-2016 |
| | | CN | 109897606 A | 18-06-2019 |
| | | CN | 109971429 A | 05-07-2019 |
| | | CN | 109971430 A | 05-07-2019 |
| | | CN | 113817448 A | 21-12-2021 |
| | | CN | 113943552 A | 18-01-2022 |
| | | CN | 113956851 A | 21-01-2022 |
| | | JP | 5001181 B2 | 15-08-2012 |
| | | JP | 2008531836 A | 14-08-2008 |
| | | KR | 20070121708 A | 27-12-2007 |
| | | KR | 20130006510 A | 16-01-2013 |
| | | MY | 143264 A | 15-04-2011 |
| | | MY | 151951 A | 31-07-2014 |
| | | MY | 152930 A | 15-12-2014 |
| | | MY | 164609 A | 30-01-2018 |
| | | MY | 165102 A | 28-02-2018 |
| | | MY | 190315 A | 13-04-2022 |
| | | NO | 347752 B1 | 18-03-2024 |
| | | SG | 169352 A1 | 30-03-2011 |
| | | US | 2006243944 A1 | 02-11-2006 |
| | | WO | 2006094303 A2 | 08-09-2006 |

EPO FORM P0459

For more details about this annex : see Official Journal of the European Patent Office, No. 12/82

page 2 of 2